# EUROPÄISCHE PATENTSCHRIFT

(11) **EP 1 267 123 B1**
(45) Veröffentlichungstag und Bekanntmachung des Hinweises auf die Patenterteilung: **09.09.2009**
(21) Anmeldenummer: 02450134.8
(22) Anmeldetag: 07.06.2002
(51) Int. Cl.: F23K 3/00, B65G 3/04

(54) **Vorrichtung zum Austragen von Holzpellets aus einem Lagerraum**
Apparatus for extracting wood pellets from a storage space
Dispositif d'extraction de boulettes de bois d'un espace de stockage

(30) Priorität: 12.06.2001 AT 46901 U
(43) Veröffentlichungstag der Anmeldung: 18.12.2002
(73) Patentinhaber: Hofer, Erich, 5120 St. Pantaleon (AT)
(72) Erfinder: Hofer, Erich, 5120 St. Pantaleon (AT)
(74) Vertreter: Hübscher, Helmut

(56) Entgegenhaltungen:
- CH-A- 256 762
- DE-A- 3 007 490
- DE-A- 3 435 026
- US-A- 2 560 480

## Beschreibung

Die Erfindung bezieht sich auf eine Vorrichtung zum Austragen von Holzpellets aus einem Lagerraum mit einem an eine Austragsöffnung zwischen geneigten Bodenabschnitten anschließbaren, eine Austragschnecke aufnehmenden Gehäuse, das eine zur Austragschnecke abfallende Gleitwand aufweist, die eine zur Austragschnecke parallele Ausnehmung zur Aufnahme eines von der Welle der Austragschnecke antreibbaren Rüttelbleches bildet.

Zur Austragung von Holzpellets aus Lagerräumen werden Austragschnecken eingesetzt, die in trogartigen Gehäusen gelagert sind. Da das Gehäuse im Bereich einer sich zwischen geneigten Bodenabschnitten des jeweiligen Lagerraumes ergebenden Austragsöffnung vorgesehen ist, gleiten die Holzpellets entlang der geneigten Bodenabschnitte zur Austragsöffnung des Lagerraumes und über eine Gleitwand des Gehäuses zur Austragschnecke, um dann mit Hilfe der Austragschnecke stirnseitig aus dem Gehäuse gefördert zu werden. Diese bekannten Austragsvorrichtungen können jedoch keinen gleichmäßigen an den jeweiligen Brennstoffbedarf eines Heizkessels angepaßten Austrag von Holzpellets sicherstellen.

Für die gleichmäßige Einbringung von Kohlenstaub in einen zum Feuerungsraum führenden Förderluftstrom über eine Förderschnecke ist es bekannt (US 2 560 480 A), eine als Rüttelblech mit Unwuchtantrieb ausgebildete Gleitwand vorzusehen, um eine Brückenbildung im Gutstock zu verhindern. Die durch den Unwuchtantrieb entstehende Bewegung quer zur Gleitwand ist allerdings für die besonderen Förderbedingungen von Holzpellets ungeeignet. Des weiteren ist es bekannt (CH 256 762 A), Festbrennstoff mit Hilfe eines Rührwerks aufzulockern, das einen den Gutstock durchsetzenden Rührarm aufweist. Nachteilig ist hierbei vor allem, daß der Rührarm quer durch den Gutstock bewegt werden muß.

Der Erfindung liegt somit die Aufgabe zugrunde, eine Vorrichtung zum Austragen von Holzpellets aus einem Lagerraum der eingangs geschilderten Art mit einfachen konstruktiven Mitteln so auszugestalten, daß eine störungsfreie, an den jeweiligen Brennstoffbedarf angepaßte Ausförderung der Holzpellets aus dem Lagerraum gewährleistet werden kann.

Die Erfindung löst die gestellte Aufgabe dadurch, daß das quer zur Austragschnecke entlang der Gleitwand verschiebbar gelagerte Rüttelblech mit einem unteren randparallelen Abschnitt in einen nach unten durch die Gleitwand begrenzten Zulaufkanal zur Austragschnecke ragt, dessen der Gleitwand gegenüberliegende Begrenzungswand mit dem unteren Abschnitt des Rüttelbleches gegen die Austragschnecke hin divergiert.

Durch das in der Gleitwand vorgesehene Rüttelblech, das entlang der Gleitwand quer zur Austragschnecke verschiebbar gelagert ist, werden die der Gleitwand zugeführten Pellets zumindest während der Rüttelblechbewegung zur Austragschnecke hin entlang der Gleitwand mitgenommen, was eine vorteilhafte Voraussetzung für die störungsfreie Zufuhr der Holzpellets zur Austragschnecke darstellt. Da darüber hinaus der Antrieb des Rüttelbleches von der Welle der Austragschnecke abgeleitet ist, und zwar in einfacher konstruktiver Weise über einen Exzentertrieb, wird die Zuförderung der Holzpellets zur Austragschnecke entlang der Gleitwand vom Schneckenantrieb und damit von der Fördermenge der Austragschnecke abhängig, was den an den jeweiligen Brennstoffbedarf angepaßten Austrag der Holzpellets ermöglicht.

Aufgrund des Einragens des Rüttelblechs in einen nach unten durch die Gleitwand begrenzten Zulaufkanal wirkt das Rüttelblech innerhalb des Zulaufkanales als in Förderrichtung wirksamer Schieber, der die Weiterförderung der Holzpellets zur Austragschnecke durch den Zulaufkanal unterstützt, insbesondere wenn dieser Zulaufkanal sich gegen die Austragschnecke hin erweitert, so daß Verstopfungen des Zulaufkanales ausgeschlossen werden können.

Ein gegenüber der oberen Begrenzungswand des Zulaufkanales in Förderrichtung divergierender unterer Abschnitt des Rüttelbleches läßt sich in einfacher Weise durch eine entsprechende Abwinkelung des Rüttelbleches erreichen, wenn der untere Abschnitt des Rüttelbleches gegenüber dem anschließenden Blechabschnitt abwärts geneigt verläuft. Wird das Rüttelblech dabei in Schlitzführungen mit einem der abgewinkelten Form des Rüttelbleches entsprechenden Verlauf verschiebbar geführt, so bedingt die Verschiebebewegung des Rüttelbleches innerhalb der Schlitzführung aufgrund der Abwinkelung des Rüttelbleches eine Bewegungskomponente nicht nur in Richtung des Rüttelbleches, sondern auch quer dazu, so daß durch diese kombinierte Rüttelblechbewegung die Förderung der Holzpellets entlang der Gleitwand zusätzlich unterstützt werden kann.

Der Exzentertrieb zum Antrieb des Rüttelbleches kann unterschiedlich konstruktiv ausgeführt werden. Besonders einfache Konstruktionsverhältnisse ergeben sich allerdings, wenn dieser Exzentertrieb aus einem auf der Stirnseite der Schneckenwelle exzentrisch angeordneten Kurbelzapfen für einen am Rüttelblech angelenkten Verbindungshebel besteht. In diesem Fall braucht lediglich die Schneckenwelle stirnseitig exzentrisch angebohrt zu werden, um den Kurbelzapfen für den Verbindungshebel einzusetzen, der somit als Pleuel für den Rüttelblechantrieb wirksam wird.

In der Zeichnung ist der Erfindungsgegenstand beispielsweise dargestellt. Es zeigen
- Fig. 1: eine erfindungsgemäße Vorrichtung zum Austragen von Holzpellets aus einem Lagerraum in einem vereinfachten Querschnitt und
- Fig. 2: diese Vorrichtung in einer stirnseitigen Ansicht.

Gemäß dem dargestellten Ausführungsbeispiel besteht die Austragsvorrichtung aus einem Gehäuse 1, das eine Austragschnecke 2 aufnimmt. Dieser Austragschnecke 2 ist innerhalb des Gehäuses 1 ein Zulaufkanal 3 vorgeordnet, der auf der Unterseite durch eine Gleitwand 4 begrenzt wird. Diese Gleitwand 4 bildet mit einer gegenüberliegenden, ebenfalls geneigt verlaufenden Wand 5 einen trichterartigen Einlaufabschnitt des Gehäuses 1, der in den Zulaufkanal 3 übergeht, dessen der Gleitwand 4 gegenüberliegende Begrenzungswand mit 6 bezeichnet ist. Da die Wände 4 und 5 jeweils geneigte Bodenabschnitte 7 eines nicht näher dargestellten Lagerraumes fortsetzen, schließt der trichterförmige Einlaufteil des Gehäuses 1 zwischen den Wänden 4 und 5 unmittelbar an die Austragsöffnung 8 des Lagerraumes zwischen den Bodenabschnitten 7 an.

Die Gleitwand 4 bildet eine Ausnehmung 9, die sich parallel zur Austragschnecke 2 erstreckt und ein Rüttelblech 10 aufnimmt, das in Schlitzführungen 11 der Stirnwände 12 des Gehäuses 1 quer zur Austragschnecke 2 entlang der Gleitwand 4 verschiebbar gehalten wird. Zur zusätzlichen Abstützung können selbstverständlich zwischen den Stirnwänden 12 auch Zwischenwände mit entsprechenden Schlitzführungen 11 vorgesehen sein. Da das Rüttelblech 10 einen unteren randparallelen Abschnitt 13 bildet, der gegenüber dem anschließenden Blechabschnitt abwärts abgewinkelt ist, und die Schlitzführungen 11 eine der abgewinkelten Form des Rüttelbleches 10 angepaßten Verlauf aufweisen, wird bei einer Bewegung des Rüttelbleches 10 entlang der Schlitzführungen 11 eine zusätzliche Verlagerung des Rüttelbleches 10 quer zur Gleitwand 4 erreicht.

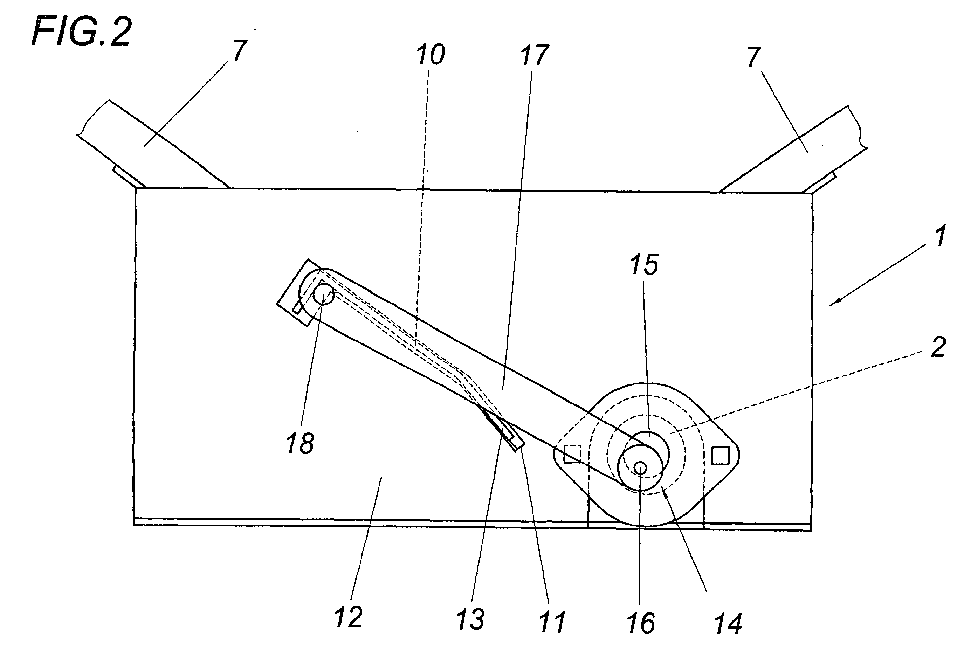

Der Antrieb des Rüttelbleches 10 erfolgt nach der Fig. 2 über einen Exzentertrieb 14, der gemäß dem dargestellten Ausführungsbeispiel aus einem auf der Stirnseite der Schneckenwelle 15 exzentrisch angeordneten Kurbelzapfen 16 besteht, auf dem ein Verbindungshebel 17 als Pleuel gelagert ist. Dieser Verbindungshebel 17 ist am Rüttelblech 10 über eine Achse 18 angelenkt, so daß mit jeder Umdrehung der Schneckenwelle 15 eine hin- und hergehende Schwingbewegung des Rüttelbleches 10 verbunden ist.

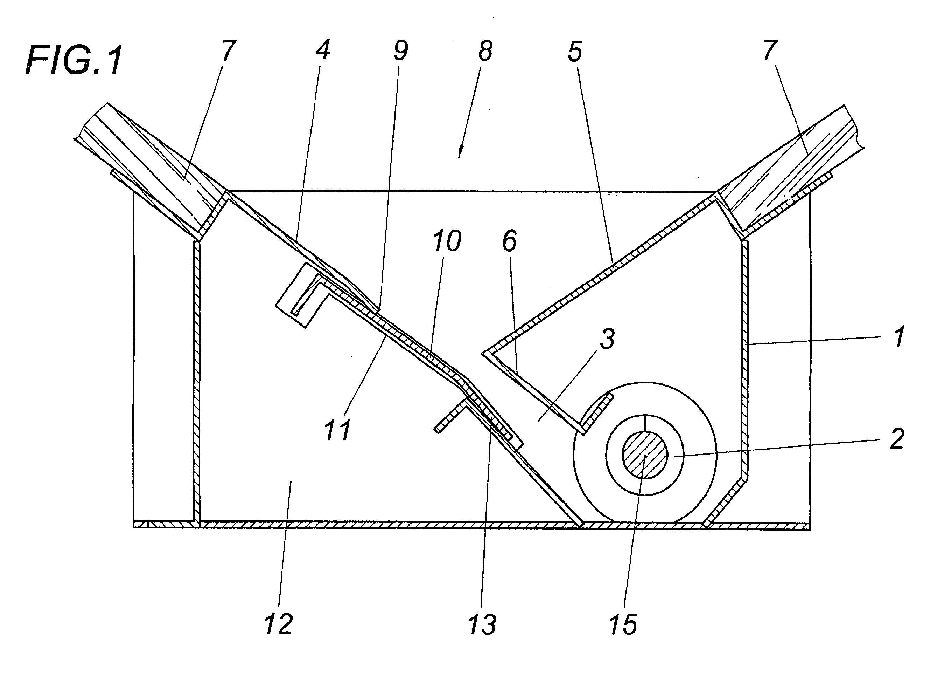

Da der untere Abschnitt 13 des Rüttelbleches 10 die Gleitwand 4 im Bereich des Zulaufkanales 3 übergreift, wie dies der Fig. 1 zu entnehmen ist, bildet das Rüttelblech 10 im Bereich des Zulaufkanales 3 mit dem unteren Abschnitt 13 einen Schieber, der die Weiterförderung der dem Zulaufkanal 3 zugeführten Holzpellets zur Austragschnecke 2 unterstützt, weil dieser Abschnitt 13 mit der Begrenzungswand 6 des Zulaufkanales 3 gegen die Austragschnekke 2 hin divergiert. Die über den trichterförmigen Einlaufteil des Gehäuses 1 zwischen den Wänden 4 und 5 in den Bereich des Rüttelbleches 10 gelangenden Holzpellets werden entsprechend dem Antrieb der Austragschnecke 2 durch das Rüttelblech 10 in den Zulaufkanal 3 und von dort zur Austragschnekke 2 gefördert, wobei aufgrund der Abhängigkeit der Förderbewegung des Rüttelbleches 10 von der Umlaufgeschwindigkeit der Austragschnecke 2 die Menge der über das Rüttelblech 10 der Austragschnecke 2 zugeführten Holzpellets der Fördermenge der Austragschnecke 2 entspricht, so daß mit einer solchen Austragsvorrichtung ein an den jeweiligen Brennstoffbedarf vorteilhaft angepaßter Austrag der Holzpellets aus dem Lagerraum gewährleistet ist.

## Patentansprüche

1. Vorrichtung zum Austragen von Holzpellets aus einem Lagerraum mit einem an eine Austragsöffnung (8) zwischen geneigten Bodenabschnitten (7) anschließbaren, eine Austragschnecke (2) aufnehmenden Gehäuse (1), das eine zur Austragschnecke (2) abfallende Gleitwand (4) aufweist, die eine zur Austragschnecke (2) parallele Ausnehmung (9) zur Aufnahme eine von der Welle (15) der Austragschnecke (2) über einen Excentertrieb (14) antrelbbaren Rüttelbleches (10) bildet, **dadurch gekennzeichnet, daß** das quer zur Austragschnecke (2) entlang der Gleitwand (4) verschiebbar gelagerte Rüttelblech (10) mit einem unteren randparallelen Abschnitt (13) in einen nach unten durch die Gleitwand (4) begrenzten Zulaufkanal (3) zur Austragschnecke (2) ragt, dessen der Gleitwand gegenüberliegende Begrenzungswand (6) mit dem unteren Abschnitt (13) des Rüttelbleches (10) gegen die Austragschnecke (2) hin divergiert.

2. Vorrichtung nach Anspruch 1, **dadurch gekennzeichnet, daß** der untere Abschnitt (13) des Rüttelbleches (10) gegenüber dem anschließenden Blechabschnitt abwärts abgewinkelt ist.

3. Vorrichtung nach Anspruch 2, **dadurch gekennzeichnet, daß** das Rüttelblech (10) in Schlitzführungen (11) mit einem der abgewinkelten Form des Rüttelbleches (10) entsprechenden Verlauf verschiebbar geführt ist.

4. Vorrichtung nach einem der Ansprüche 1 bis 3, **dadurch gekennzeichnet, daß** der Exzentertrieb (14) aus einem auf der Stirnseite der Schneckenwelle (15) exzentrisch angeordneten Kurbelzapfen (16) für einen am Rüttelblech (10) angelenkten Verbindungshebel (17) besteht.

## Claims

1. Device for discharging wood pellets from a storage area having a housing (1) which can be connected to a discharge aperture (8) between inclined base sections (7) and receives a discharge screw (2) and comprises a slide wall (4) which slopes towards the discharge screw (2) and forms a recess (9) in parallel with the discharge screw (2) for receiving a vibrating metal sheet (10) which can be driven by the shaft (15) of the discharge screw (2) via an eccentric drive (14), **characterised in that** the vibrating metal sheet (10) mounted so as to be displaceable along the slide wall (4) transversely with respect to the discharge screw (2) protrudes with a lower, edge-parallel section (13) into a supply channel (3), defined at the bottom by the slide wall (4), towards the discharge screw (2), wherein the delimiting wall (6) of the supply channel opposite the slide wall diverges with the lower section (13) of the vibrating metal sheet (10) towards the discharge screw (2).

2. Device as claimed in Claim 1, **characterised in that** the lower section (13) of the vibrating metal sheet (10) is bent downwards with respect to the adjoining metal sheet section.

3. Device as claimed in Claim 2, **characterised in that** the vibrating metal sheet (10) is guided in a displaceable manner in slot guides (11) progressing in a manner corresponding to the bent shape of the vibrating metal sheet (10).

4. Device as claimed in any one of Claims 1 to 3, **characterised in that** the eccentric drive (14) consists of a crank pin (16) disposed eccentrically on the end side of the screw shaft (15) for a connecting lever (17) articulated on the vibrating metal sheet (10).

## Revendications

1. Dispositif d'extraction de boulettes de bois d'un espace de stockage, avec un carter (1), recevant une vis d'extraction (2), susceptible d'être raccordé à une ouverture d'extraction (8) entre des tronçons de fond (7) inclinés, carter présentant une paroi de glissement (4) descendant vers la vis d'extraction (2), formant un évidement (6), parallèle à la vis d'extraction (2), pour recevoir une tôle de secouement (10) susceptible d'être entraînée, par l'intermédiaire d'un mécanisme à excentrique (14), par l'arbre (15) de la vis d'extraction (2), **caractérisé en ce que** la tôle de secouement (10), montée de façon déplaçable le long de la paroi de glissement (4), transversalement à la vis d'extraction (2), pénètre, par un tronçon inférieur (13) parallèle au bord, dans un canal d'alimentation (3) délimité vers le bas par la paroi de glissement (4), allant à la vis d'extraction (2), dont à paroi de limitation (6), opposée à la paroi de glissement, par le tronçon inférieur (13) de la tôle de secouement (10) va en divergeant, en évoluant vers la vis d'extraction (2).

2. Dispositif selon la revendication 1, **caractérisé en ce que** le tronçon inférieur (13) de la tôle de secouement (10) est coudé vers le bas, par rapport au tronçon de tôle s'y raccordant.

3. Dispositif selon la revendication 2, **caractérisé en ce que** la tôle de secouement (10) est guidée de façon déplaçable, dans des guidages à fente (11) ayant une allure correspondant à la forme coudée de la tôle de secouement (10).

4. Dispositif selon l'une des revendications 1 à 3, **caractérisé en ce que** le mécanisme à excentrique (14) est composé d'un tourillon de manivelle (16), disposé de manière excentrique sur la face frontale de l'arbre à vis (15), pour un levier de liaison (17) articulé sur la tôle de secouement (10).
